# EUROPÄISCHE PATENTANMELDUNG

(11) **EP 0 638 373 A1**
(43) Veröffentlichungstag der Anmeldung: **15.02.1995**
(21) Anmeldenummer: 94890068.3
(22) Anmeldetag: 13.04.1994
(51) Int. Cl.: B09B 5/00, B03B 9/06, H01J 9/50

(54) **Verfahren und Anlage zum Entsorgen von Lampen**

(30) Priorität: 19.04.1993 AT 767/93; 19.04.1993 AT 768/93; 25.03.1994 AT 650/94
(71) Anmelder: M.C.I. ENTSORGUNG & RECYCLING GmbH, A-1140 Wien (AT)
(72) Erfinder: Kristec, Martin, A-2281 Raasdorf (AT)
(74) Vertreter: Köhler-Pavlik, Johann, Dipl.-Ing.

(57) **Zusammenfassung**

Verfahren zum sicheren und möglichst emissionslosen bzw. die Materialien zur Wiederverwertung zur Verfügung stellenden Entsorgen von Lampen, speziell von Leuchtstofflampen, insbesondere Kompaktleuchtstofflampen, sowie von Mischlicht-, Quecksilberdampf-, Metallhalogendampf-, Neon-Hochspannungs-, Neon-Niederspannungs- und Natriumdampflampen, wobei zumindest einige der die Lampe bildenden Teile separiert werden, wobei die Lampen in eine automatische Zuführeinrichtung eingegeben und anschließend von dieser automatisch in zumindest einen nachfolgenden Anlagenabschnitt weitertransportiert werden und dabei zumindest ein Lampenteil bzw. Material abgetrennt wird. Beim Verfahren zur Entsorgung des Glasanteiles dieser Lampen wird zur möglichst sicheren und emissionslosen Behandlung vorteilhafterweise der Glasanteil der Lampen, speziell die Leuchtstoffröhre oder Teile davon, einschließlich noch vorhandener weiterer Komponenten einer Brechervorrichtung (16) zugeführt und das Brechen unter Wasser vorgenommen.

## Beschreibung

Die Erfindung betrifft ein Verfahren gemäß dem Oberbegriff von Patentanspruch 1 bzw. Patentanspruch 3 sowie Anlagen zur Durchführung dieser Verfahren.

Zur Entsorgung von Leuchtstoffröhren ist aus der US-PS 5,106,598 ein Verfahren bzw. eine Anlage bekannt, bei welchen Verfahren die Lampen nach Entfernung der Lampenenden in einer Brechvorrichtung trocken und daher sehr emissionsreich gebrochen und anschließend in einen Waschtank gebracht werden. Der Glasanteil wird ausgesiebt und das Waschwasser mit darin gelösten Chemikalien aus den Lampen wird weiter chemisch-physikalisch behandelt. Die Lösung wird dabei soweit gereinigt, daß der Wasseranteil wieder in den Prozeß eingegliedert werden kann und auch die Rückgewinnung einiger Substanzen ist möglich. Bezüglich der abgetrennten Kunststoffund Metallanteile sind keinerlei Angaben gemacht.

Auch die in der WO 92/10315 beschriebene Vorrichtung zur Entsorgung von Leuchtstofflampen umfaßt einen Brecher, von dem aus die Bruchstücke in Wasser fallen und ausgefiltert werden. Im Wasser gelöste Stoffe können über mehrstufige Prozesse ausgefiltert und das Wasser damit der Wiederverwendung zugeführt werden. Zur emissionsreduzierenden Behandlung ist lediglich die Besprühung des Brecherbereiches mit Wasser vorgesehen. Durch das Besprühen mit Wasser ist aber nicht sichergestellt, daß keine Bruchstücke mit großer Geschwindigkeit weggschleudert werden oder nicht einzelne Gasblasen mit Glasstaub oder ähnlichen Verunreinigungen austreten können. Wiederum sind keinerlei Angaben darüber gemacht, was mit dem Kunststoff- oder Metallanteil der gebrochenen Lampen geschehen soll.

Die Aufgabe der vorliegenden Erfindung ist ein Verfahren zur optimalen automatischen und damit sicheren und kostengüngstig durchführbaren Separierung der die Lampen bildenden Teile in gleichartige bzw. gleich zu behandelnde Materialgruppen im Hinblick auf deren Weiterbehandlung oder Wiederverwertung.

Eine weitere Aufgabe besteht in der kompletten und möglichst anlagenschonenden, ungefährlichen und emissionsfreien Entsorgung von Lampen, insbesondere der eingangs angeführten Sorten, mit optimalen Rückgewinnungsmöglichkeiten der in den Lampen enthaltenen bzw. diese aufbauenden Substanzen und Materialien.

Eine weitere Aufgabe ist eine vorteilhafte Anlage zur Durchführung dieser Verfahren.

Zur Lösung der ersten Aufgabe sind die Merkmale des kennzeichnenden Teiles des Patentanspruches 1 vorgesehen. Damit ist eine ungefährliche und dabei durch die Automatisierung gleichfalls einfache und rationelle Lampenentsorgung selbst für durch ihre Inhaltsstoffe problematische Lampensorten möglich.

Gemäß weiteren, in Patentanspruch 2 beschriebenen Merkmalen der Erfindung wird in wirtschaftlicher und sicherer Weise auch die automatische Zerlegung und Entsorgung der relativ kompliziert aufgebauten Kompaktleuchtstofflampen ermöglicht.

Die zweite Aufgabe in Verbindung mit der Entsorgung des Glasanteiles einschließlich allfälliger Gas- und Leuchtstoffanteile von Lampen, speziell von Leuchtstofflampen, insbesondere Kompaktleuchtstofflampen, sowie von Mischlicht-, Quecksilberdampf-, Metallhalogendampf-, Neon-Hochspannungs-, Neon-Niederspannungs- und Natriumdampflampen, wird erfindungsgemäß durch die Merkmale des kennzeichnenden Teils des Patentanspruches 3 gelöst. Damit ist einerseits eine besonders gute Entstaubung des beim Brechen freiwerdenden Gases als auch eine Abbremsung von beim Brechen weggschleuderten Glas- oder Metallteilen durch das dichtere Medium Wasser erreichbar. Dies verringert die Emissionen beim Brechen, gestattet die problemlose und einfache Rückgewinnung der beim Brechen freiwerdenden Gase bei gleichzeitig hoher mechanischer Schonung der Anlage im Brecherbereich. Vorteilhafterweise wird das Zuführen der Lampen bzw. deren Glasanteil und anderer Komponenten mittels eines der zuvor beschriebenen Verfahren durchgeführt.

Die gebrochenen Glasteile werden nach einer vorteilhaften Weiterführung des Verfahrens aus dem Wasser gehoben und vorzugsweise dabei mit Wasser bespritzt, vorzugsweise auch noch unterhalb des Wasserspiegels. Damit ist bereits eine sehr gute Reinigung der Glasteile bzw. der allfälligen weiteren Komponenten gegeben.

Gemäß einem weiteren Erfindungsmerkmal werden die gebrochenen Glasteile und weiteren Komponenten nach dem Brechen und allfälligen Bespritzen mit Wasser in einem erwärmten, vorzugsweise 50 - 60°C aufweisenden, Waschmedium neuerlich gewaschen, wodurch sie vollständig vom Umweltschmutz und auch vom Leuchtstoff gereinigt werden.

Das Waschmedium besteht vorteilhafterweise, bei günstiger Reinigungswirkung und wirtschaftlicher Herstellung, aus Wasser mit Neutralseife.

Gemäß einem weiteren Merkmal der Erfindung ist vorgesehen, daß die gebrochenen Glasteile und Komponenten vom Waschmedium umspült, vorzugsweise auch damit bespritzt werden, wobei sie vorzugsweise im Waschmedium bewegt werden. Damit kann die vollständige Reinigung in kürzerer Zeit erfolgen als bei ebenfalls möglichem, gegenüber den gebrochenen Teilen ruhig stehendem Waschmedium.

Wenn die beim Waschen mit dem Waschmedium entstehenden Dämpfe abgesaugt, gereinigt, kondensiert und das Kondensat wieder dem Waschmedium zugegeben wird, ist eine umweltschonende und wirtschaftliche Entsorgung gegeben. Das Waschmedium wird zurückgewonnen und muß daher nicht durch frisches Medium ersetzt werden, wodurch beispielsweise Wasser und Neutralseife eingespart werden können. Auch die Umwelt wird weniger durch Emissionen belastet und die den Dämpfen entzogenen Stoffe können vorteilhafterweise wieder als Rohstoffe in den Produktionskreislauf rückgeführt werden.

Die gleichen Vorteile wie oben angegeben werden gemäß einem weiteren Erfindungsmerkmal erzielt, wenn die beim Brechen freiwerdenden Gase abgesaugt, gereinigt und vorzugsweise zur Wiederverwendung abgefüllt werden.

Zur besseren Auslastung des Brechers und zur Vermeidung von unwirtschaftlichen Leerlaufzeiten kann vorgesehen sein, daß die Lampen bzw. deren Glasanteile chargenweise behandelt werden.

Vorteilhafterweise ist vorgesehen, daß die gewaschenen Glasteile als letzter Behandlungsschritt von allenfalls vorhandenen anderen Komponenten mit anderem spezifischem Gewicht getrennt und jeder dieser Teile oder Komponenten vorzugsweise in Behälter eingebracht werden. Damit ist eine weitestgehende Trennung der zu entsorgenden Lampen in wiederverwertbare bzw. einfach weiterbehandelbare oder deponierbare Fraktionen oder Materialgruppen gegeben.

Die Vorrichtung zum Entsorgen von Lampen, speziell von Leuchtstofflampen, insbesondere Kompaktleuchtstofflampen, sowie von Mischlicht-, Quecksilberdampf-, Metallhalogendampf-, Neon-Hochspannungs-, Neon-Niederspannungs- und Natriumdampflampen, ist zur Lösung der dritten Aufgabe gekennzeichnet durch die Merkmale des Patentanspruches 9. Damit ist nach dem auch händisch durchführbaren Einbringen der Lampen in bereits vorgebrochenem oder noch unversehrtem Zustand der weitere Verfahrensablauf automatisierbar und so ohne Gefahrdung von Personen sicher und wirtschaftlich realisierbar.

Gemäß einer speziellen vorteilhaften Ausführungsform der Erfindung ist eine Vorrichtung zum Entsorgen von Lampen, speziell von Leuchtstofflampen, insbesondere Kompaktleuchtstofflampen, gekennzeichnet durch die Merkmale in Patentanspruch 10. Durch diese Merkmale ist die automatische und damit sichere und wirtschaftliche Entsorgung der immer weitere Verbreitung findenden Kompaktleuchtstofflampen möglich.

Die Abtrenneinrichtung für den Glasüberkörper umfaßt vorzugsweise eine Zwangssteuerungsbahn zur Ausrichtung der Lampe mit nach unten weisendem Glasüberkörper, einer ortsfesten Schneidevorrichtung, vorzugsweise einer Glühschneidevorrichtung, und einem zur Anlage an einen Umfangsteil der Lampe bestimmten Bremsstreifen, wodurch eine einfache und funktionssichere Abtrennung des Glasüberkörpers gegeben ist.

Vorteilhafterweise ist weiters vorgesehen, daß die Abtennvorrichtung für die Leuchtstoffröhren der Kompaktleuchtstofflampen eine mit Magneten versehen Positioniereinrichtung zur Ausrichtung der Lampen mit den Leuchtstoffröhren aufweist und vorzugsweise der Pneumatikarm mit dem Lampenkörper einschließlich des Elektronikteiles gegenüber einer vorzugsweise ortsfesten Abzugsvorrichtung für die Leuchtstoffröhren absenkbar ist, wodurch eine wirtschaftliche und doch störungssichere Trennung der weiterzubehandelnden Leuchtstoffröhren vom Rest der Lampe möglich ist. Im Feld der Magnete wird der noch mit der Leuchtstoffröhre verbundene Elektronikteil jeder Lampe gleich ausgerichtet, sodaß die Röhren auf die Abzugseinrichtung geschoben und durch das Absenken des Pneumatikarmes vom Elektronikteil und der Lampenfassung losgerissen werden können.

Gemäß einem weiteren Merkmal der Erfindung sind im Kreissektor nach der Abtrennvorrichtung für die Leuchtstoffröhren eine weitere Zwangssteuerungsbahn zur Ausrichtung der Lampe mit nach unten weisendem Sockel vorgesehen, unterhalb dieses Kreissektors ein Bereich zur Anordnung eines Behälters zur Aufnahme des Elektronikteiles der Lampe sowie in einem anschließenden Kreissektor ein Bereich zur Anordnung eines Behälters für den Kunststoffsockel der Kompaktleuchtstofflampe vorgesehen.

In einer weiteren Ausgestaltung des Erfindungsgedankens ist eine Vorrichtung zur Entsorgung des Glasanteiles einschließlich allfälliger Gas- und Leuchtstoffanteile von Lampen, speziell von Leuchtstofflampen, insbesondere Kompaktleuchtstofflampen, sowie von Mischlicht-, Quecksilberdampf-, Metallhalogendampf-, Neon-Hochspannungs-, Neon-Niederspannungs- und Natriumdampflampen, umfassend allenfalls eine Abtrenneinrichtung für den den Leuchtstoff enthaltenden Glasanteil, eine Brechervorrichtung und zumindest eine Wascheinrichtung für den gebrochenen Glasanteil, durch die Merkmale im kennzeichnenden Teil des Patentanspruches 13 gekennzeichnet. Damit kann bei guter Entstaubung des beim Brechen freiwerdenden Gases zusätzlich die Abbremsung von beim Brechen weggschleuderten Glas- oder Metallteilen im dichten Medium Wasser und folglich eine Verringerung der Emissionen und die problemlose und einfache Rückgewinnung der beim Brechen freiwerdenden Gase erzielt werden. Gleichzeitig wird dieAnlage im Brecherbereich mechanisch geschont. Die Pneumatiktüren verhindern jegliche Gefährdung in der äußeren Umgebung des Brechers beim Brechvorgang.

Zur einfachen Entfernung der gebrochenen Glasteile und anderer Komponenten aus dem Tank des Brechers beginnt vorteilhafterweise unterhalb des Brechers eine Fördereinrichtung, vorzugsweise ein Förderband, das oberhalb des Wasserspiegels seitlich des Brechers endet, wobei diese Fördereinrichtung vorzugsweise siebartig ausgebildet ist. Die siebartige Ausführung vermeidet übermäßige Ausschleppung von Wasser aus dem Tank und erleichtert die Reinigung der gebrochenen Komponenten.

Um die gebrochenen Komponenten schon gründlich von anhaftendem Staub und kleineren Bruchstücken zu reinigen, ist gemäß einem weiteren Merkmal der Erfindung vorgesehen, daß im Verlauf der Fördereinrichtung auf diese und die darauf transportierten Glasteile gerichtete Spritzdüsen vorgesehen sind, vorzugsweise auch noch unterhalb des Wasserspiegels.

Vorteilhafterweise ist die Vorrichtung weiters gekennzeichnet durch eine zumindest teilweise mit einem Waschmedium gefüllte oder in einen Tank mit Waschmedium eintauchende Waschtrommel, die vorzugsweise mit einem Spiralengang an der Innenseite versehen und gegen das der Einbringöffnung gegenüberliegende Ende konisch zulaufend ausgeführt ist. Diese Waschtrommel reinigt die gebrochenen Komponenten gründlich - speziell durch die Umspülung der Komponenten durch das Waschmedium - von allem anhaftenden Schmutz und insbesondere auch von den Leuchtstoffen, sodaß sie in dieser Beziehung unbedenklich weiterbehandelt werden können.

Zur Verbesserung der Reinigungswirkung durch Erleichterung der Umspülung ist vorteilhafterweise die Wandung der Waschtrommel siebartig durchbrochen ausgeführt.

Die gute Reinigung wird von einem Abtropfen beendet und das übermäßig Ausschleppen von Waschmedium vermieden, wenn weiters das der Einbringöffnung gegenüberliegende Ende der Waschtrommel mit einer Austragsöffnung für die gewaschenen Glasteile und allenfalls weiteren Komponenten versehen ist und oberhalb des Niveaus des Waschmediums liegt.

Zur einerseits wirtschaftlichen als auch umweltschonenden Betriebsweise der erfindungsgemäßen Vorrichtung ist eine Abzugseinrichtung, ein Schwadenkondensator und Rückführungseinrichtungen für die Dämpfe aus der Waschtrommel vorzugsweise Reinigungseinrichtungen für die Dämpfe oder das Kondensat, vorgesehen. Das Waschmedium kann derart zurückgewonnen werden, was dessen Ersatz minimiert. An die Umgebung werden günstigstenfalls keinerlei Emissionen abgegeben. Durch die Reinigungseinrichtungen können wiederverwertbare Substanzen wieder in den Produktionskreislauf rückgeführt oder andere Stoffe einer Weiterbehandlung/Deponierung zugeführt werden.

Gemäß einem weiteren Erfindungsmerkmal ist anschließend an die allfällige Waschtrommel zumindest ein Vibrationsförderband zur Separierung der aus der Waschtrommel ausgetragenen, gebrochenen und allenfalls gewaschenen Komponenten nach deren spezifischem Gewicht vorgesehen. Damit kann eine weitestgehende Trennung der die Lampe bildenden Materialien oder Materialgruppen erzielt und deren einfache Wiederverwertung oder weitere Entsorgung in einfacher Weise vorbereitet werden.

Die Vorrichtung ist weiters dadurch gekennzeichnet, daß eine Absaugeinrichtung für die beim Brechen freiwerdenden Gase mit der Brecherkammer in Verbindung steht. Damit sind auch diese Gase für die Wiederverwertung oder gezielte Nachbehandlung erfaßbar und die Emissionen der Anlage weiter herabgesetzt.

Schließlich sind zur Rückgewinnung von Rohstoffen aus dem Wasser bzw. Waschmedium und um die Wiederverwendung dieser Medien in der Anlage zu erlauben Abtennvorrichtungen, vorzugsweise zumindest ein Filter und/oder eine Zentrifuge, zur Behandlung des Waschwassers aus dem Tank des Brechers bzw. des Waschmediums vorgesehen.

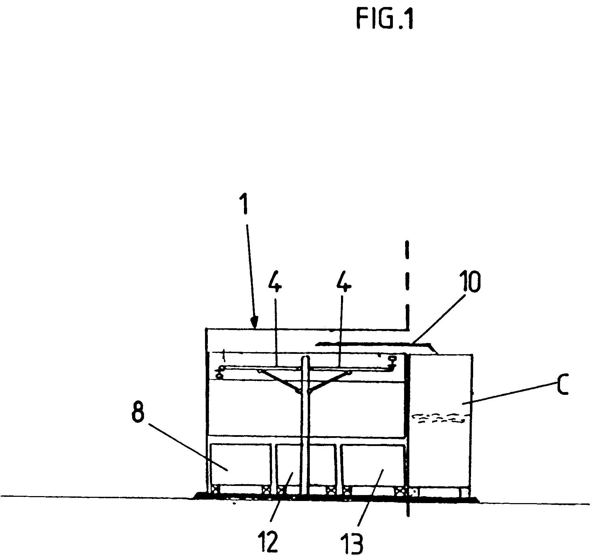

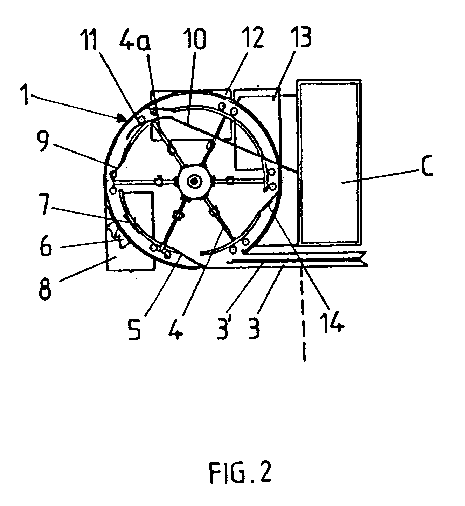

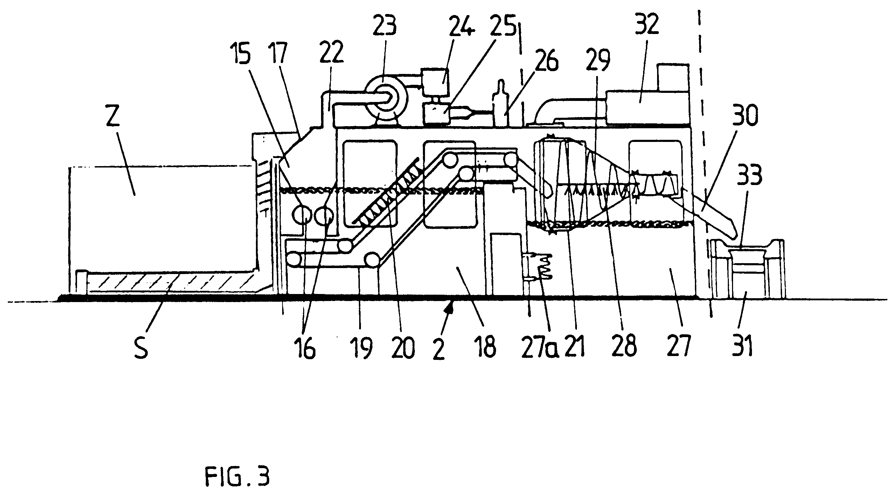

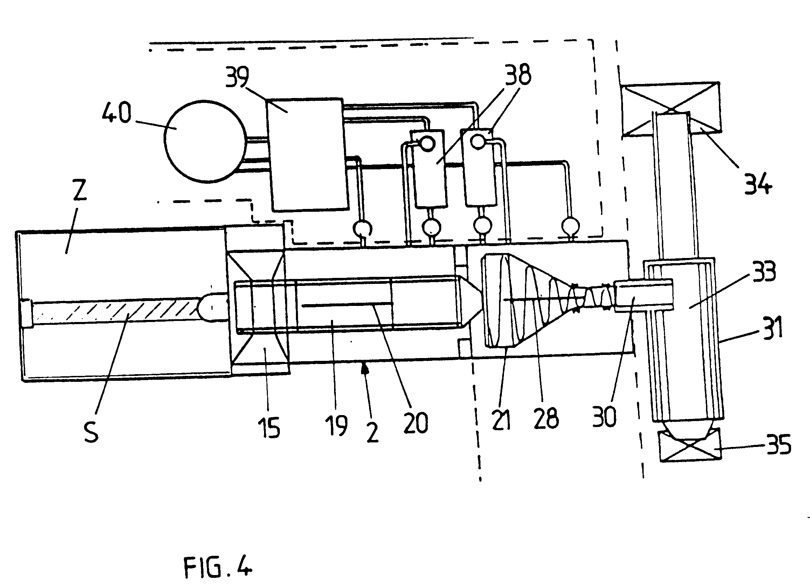

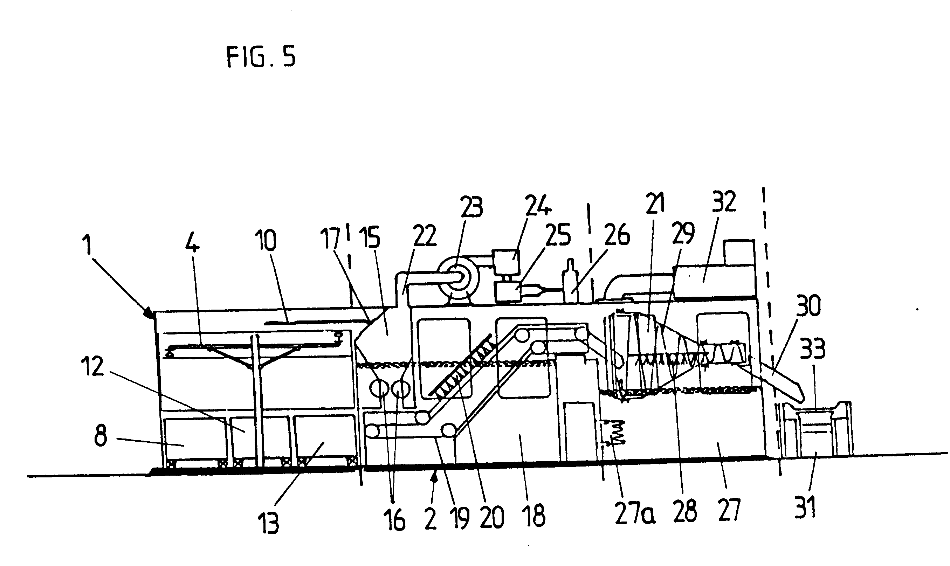

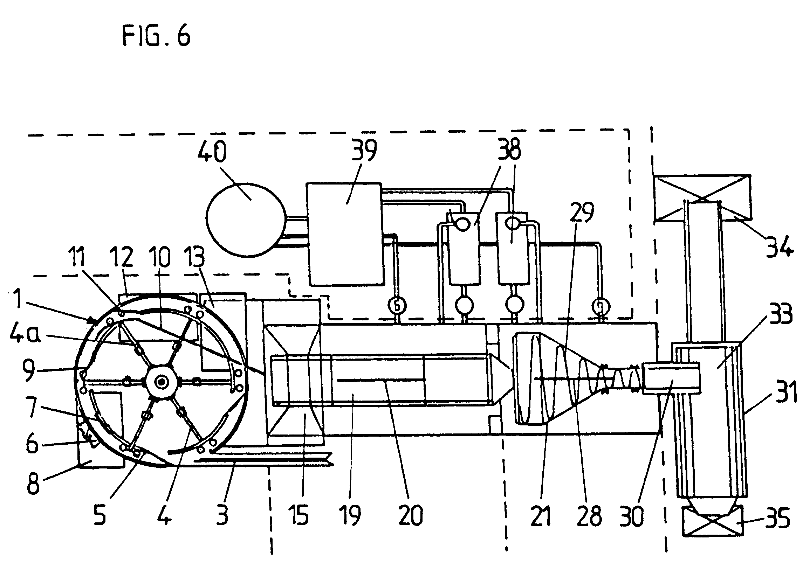

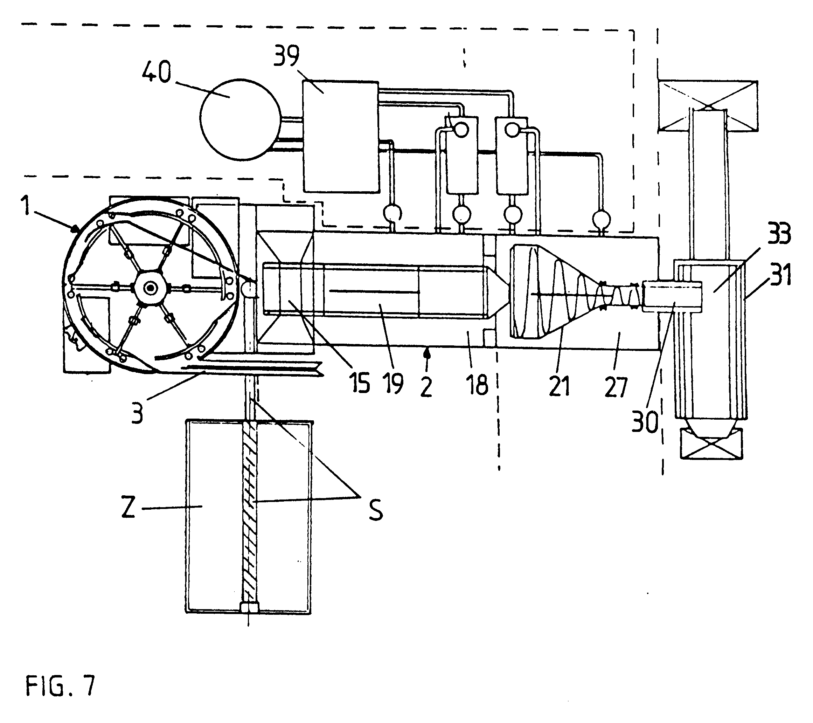

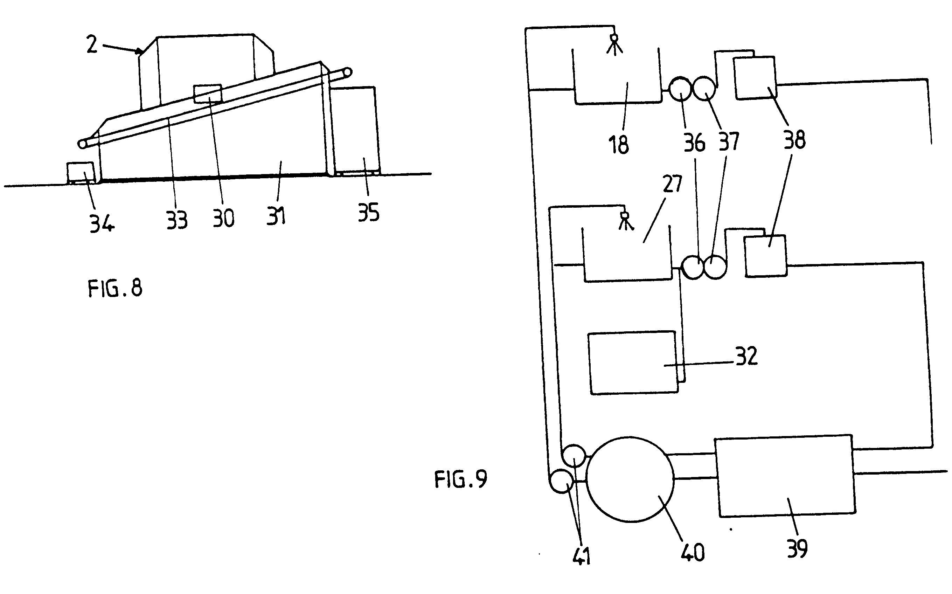

In der nachfolgenden Beschreibung soll unter Bezugnahme auf die beigefügten Zeichnungen eine vorteilhafte Ausführungsform einer erfindungsgemäßen Anlage und die damit durchgeführte Verfahrensvariante beispielhaft erläutert werden. Dabei zeigt die Fig. 1 eine Seitenansicht einer erfindungsgemäßen Trennvorrichtung, Fig. 2 eine Draufsicht auf die Vorrichtung der Fig. 1, Fig. 3 stellt schematisch erfindungsgemäße Brech- und Wascheinrichtung mit vorgeschaltetem Zuführbehälter in der Seitenansicht dar, Fig. 4 ist eine Draufsicht auf die Einrichtung der Fig. 3, Fig. 5 zeigt eine Seitenansicht einer erfindungsgemäßen Vorrichtung zur Entsorgung von speziell Kompaktleuchtstofflampen, bei der die automatische Einbringungs- und Trennvorrichtung entsprechend der Fig. 1 und 2 einer kombinierte Brecher- und Waschanlage vorgeschaltet ist, Fig. 6 ist eine Draufsicht auf die Anlage der Fig. 5, Fig. 7 stellt eine Draufsicht auf eine Anlage dar, der sowohl eine Trennvorrichtung gemäß den Fig. 1 und 2 als auch ein Zuführbehälter vorgeschaltet ist, Fig. 8 ist eine Ansicht des letzten Anlagenabschnittes der Brech- und Wascheinrichtung der Fig. 3 bis 7 und Fig. 9 ein schematisches Diagramm der Wasser- bzw. Waschmediumsreinigung.

In den Fig. 1, 2, 5, 6 und 7 ist mit 1 die Einbringungs- und Trennanlage für Kompaktleuchtstofflampen (auch Sparlampen genannt) bezeichnet, welche vorteilhafterweise bei einer Brech- und Wascheinrichtung (beispielsweise der nachfolgend noch beschriebenen Einrichtung) vorgesehen ist, aber zur Entsorgung von beispielsweise herkömmlichen Leuchtstoffröhren, Metalldampflampen, etc. nicht unbedingt erforderlich ist. Diese letztgenannten Lampentypen werden direkt oder mittels einer später noch (in Verbindung mit Fig. 3 und 4) genauer beschriebenen Vorrichtung in den bezeichneten Brecher- und Waschteil der Anlage zugeführt. Nachfolgend soll jedoch die erfindungsgemäße Entsorgung von Kompaktleuchtstofflampen unter weitestgehender Berücksichtigung der Möglichkeit der Rückgewinnung der Materialien der Lampen beschrieben werden.

Die Kompaktleuchtstofflampen werden über die Bestückungseinrichtung 3 in die Anlage 1 eingegeben. Diese Einrichtung 3 ist eine im wesentlichen V-fömige Schiene mit einem Schlitz 3' an der unteren Kante, durch welchen Schlitz die Gewindeabschnitte der Fassung der mit ihrem Glasoberteil nach oben weisenden und aufrecht auf die Schiene aufgebrachten Lampen hindurchragen. Durch fortgesetztes Aufschieben von Lampen gelangen schließlich die Lampen am Ende der als Schiene ausgeführten Bestückungseinrichtung 3 in den Wirkungsbereich von Pneumatikarmen 4.

Durch diese im Kreis bewegbaren Pneumatikarme 4 mit Saug-, Schraub- oder anderen Greifeinrichtungen, vorteilhafterweise mit Saugknöpfen, wird jeweils die am Ende der Bestückungseinrichtung 3 befindliche Lampe an der Fassung gepackt aber dabei drehbar gehalten und bei einer ersten, der Bestückungsvorrichtung 3 anschließenden Zwangssteuerungsbahn 5 derart zum Wenden gebracht, daß der Glasüberkörper der Kompaktleuchtstofflampe nach unten und die Fassung nach oben zeigt. Anstelle der durch Führungsschienen für die Lampe, die Greifeinrichtungen oder damit in Verbindung stehende Führungselemente, ausgeführten Zwangssteuerungsbahn 5 können auch ansteuerbare Motoren, Hydraulik- oder Pneumatikzylinder od. dgl. auf den Pneumatikarmen 4 angebracht sein, um die nötigen Bewegungen der Lampen zu bewirken.

Nun passieren die Pneumatikarme 4 mit den Lampen einen Schneidesektor, der vorzugsweise eine Glühschneidevorrichtung 6 und eine Bremsstreifen 7 umfaßt. Durch die fortgesetzte Kreisbewegung der Pneumatikarme 4 werden die von ihnen gehaltenen Lampen mit einem Umfangsabschnitt am Bremsstreifen 7 anliegend vorbeigezogen, sodaß eine Rotationsbewegung der Lampen hervorgerufen wird. Dadurch kann von der ortsfest montierten Glühschneidevorrichtung 7 der Kunststoffsockel der Lampe rundherum abgeschnitten werden, wobei der Glasüberkörper in den unterhalb des Schneidesektors aufgestellten Glascontainer 8 fällt. Anstelle der Glühschneideeinrichtung könnte auch eine kleine Trennscheibe, ein Brenner mit offener Flamme od. dgl. vorgesehen sein, wobei nur darauf zu achten ist, daß der Kunststoff nicht durch zu große Wärmeentwicklung zu weich wird und schmilzt oder gar in den Glascontainer 8 abtropft.

Durch eine zweite Zwangssteuerungsbahn 9 wird die Lampe bei Fortsetzung der Kreisbewegung der Pneumatikarme 4 wieder in eine Lage gesteuert, in der die Fassung nach unten und die noch vorhandene eigentliche Leuchtstoffröhre nach oben weist.

Durch Magnete an den Seitenwandungen entlang der Zwangssteuerungsbahn 9 wird die Lampe zusätzlich zum Aufrichten durch allfällige Verdrehung um ihre Längsachse in einer Weise ausgerichtet, daß die Leuchtstoffröhren (die zumindest einen um 180° gebogenen Abschnitt aufweisen) auf eine Abzugsvorrichtung 10 zum Abziehen der Leuchtstoffröhren aufgenommen werden können. Diese Abzugsvorrichtung besteht vorteilhafterweise aus einer im wesentlichen waagerechten Schiene, deren eines Ende auf dem durch die Pneumatikarme 4 durchlaufenen Kreis liegt und deren anderes Ende vorzugsweise aus der Einbringungs- und Trenneinrichtung 1 hinausführt.

Nach der Aufnahme der Leuchtstoffröhre einer bestimmten Lampe auf die Abzugsvorrichtung 10 wird der entsprechende Pneumatikarm, der sich dann etwa in einer Position wie der Pneumatikarm 4a befindet, ruckartig gesenkt. Damit wird die Leuchtstoffröhre vom noch durch die Greifeinrichtung des abgesenkten Pneumatikarmes fest erfassten Elektronikteil und Lampensockel getrennt.

Der Lampensockel wird anschließend in einem weiteren Abschnitt des von den Pneumatikarmen 4 durchlaufenen Kreises von einer weiteren Zwangssteuerungsbahn 11 zum Kippen gebracht, wodurch der schon instabil gewordene Elektronikschrott aus dem Lampensockel heraus und in einen Metallschrottcontainer 12 fällt. Der Pneumatikarm setzt seine Kreisbewegung fort und läßt schließlich noch den Lampensockel über einem Kunststoffcontainer 13 los.

Bei einer letzten Zwangssteuerungsbahn 14 wird die zuletzt nach unten zeigende Saug-, Schraub- oder Greifvorrichtung wieder nach oben gewendet und ist zur Aufnahme einer neuen Kompaktleuchtstofflampe von der Bestückungsvorrichtung 3 bereit.

Durch den permanenten Aufschub von Leuchtstoffröhren auf die Abzugsvorrichtung 10 werden diese in Richtung auf das Ende dieser Vorrichtung 10 hin geschoben und können dort zur weiteren Verwertung oder Entsorgung entnommen werden. Beispielsweise kann am Ende der Abzugsvorrichtung 10 ein weiterer Container C vorgesehen sein, der die Leuchtstoffröhren aufnimmt, um diese dann in eine an anderer Stelle befindliche Verwertungsanlage zu überführen. Bei dem in den Fig. 5 bis 7 dargestellten Ausführungsbeispiel einer erfindungsgemäßen Anlage ist hingegen vorgesehen, daß die Leuchtstoffröhren auf der Schiene der Abzugsvorrichtung 10 in eine Brech- und Waschanlage 2 geschoben werden.

Der Brech- und Waschanlage 2 können, wie dies in den Fig. 3 und 4 dargestellt ist, auch Lampenteile, speziell in Form von Lampenbruch, insbesondere von herkömmlichen Lampen, aber auch von Metalldampflampen und dergleichen sowie diese Lampen oder Leuchtstoffröhren selbst aus einem speziell dafür ausgebildeten Zuführcontainer Z zugeführt werden. Dieser Container Z ist zum Schutz des Bedienungspersonals der Anlage und zur Vermeidung von übermäßigen Emissionen vorteilhafterweise mit dicht verschließbaren Einbringöffnungen für die Lampen, Leuchtstoffröhren oder deren Bruchstücke ausgestattet. Des weiteren verfügt er über eine automatische Transporteinrichtung, wie etwa eine Förderschnecke S, welche Einrichtung die Lampen bzw. deren Bruchstücke ohne weiteren Aufwand durch Bedienungspersonal sicher und gefährdungsfrei für Personal und Umwelt der Anlage 2 zuführt.

In der Anlage 2 gelangen die Lampen, Leuchtstoffröhren oder deren Teile aus Glas, aber auch alle anderen allfälligen Komponenten, wie noch vorhandene Kunststoff- oder Metallteile, vorerst in die Brecherkammer 15, die vorteilhafterweise mit Füllstandssensoren ausgerüstet ist, die ein Überfüllen der Brecherkammer 15 als auch einen Leerlauf der Brechervorrichtung 16 verhindern. Bei leerer Brecherkammer 15 sind die vorteilhafterweise vorgesehenen Pneumatiktüren 17 geöffnet, um das Einfüllen der Lampen, Leuchtstoffröhren - das auch unabhängig vom Zuführcontainer Z oder von der Einbringungs- und Trennanlage 1 auch in die Brecherkammer 15 direkt erfolgen kann, speziell bei anderen Lampensorten als Kompaktleuchtstofflampen - oder anderer Lampenarten zu ermöglichen.

Bei der vorgeschriebenen Füllhöhe der Brecherkammer 15 schließen sich die Pneumatiktüren 17 automatisch. Vorzugsweise sind die Wände der Brecherkammer 15 und die Pneumatiktüren 17 mit einem Material beschichtet, das die Diffusion von Wasserstoff, der bei vielen Lampentypen beim Brechen freigesetzt wird, verhindert bzw. die Diffusionsgeschwindigkeit herabsetzt. Beispiele für derartige Beschichtungsmaterialien sind manche Silikone oder Teflon.

Die Brechervorrichtung, vorzugweise umfassend Brecherwalzen 16, ist in einem mit Wasser gefüllten Tank 18 unterhalb des Wasserspiegels angeordnet, wodurch beim Brechen freiwerdende Gase entstaubt und weggschleuderte Partikel abgebremst werden. Um eine restlose Entstaubung und einen totalen Schutz der Brecherkammer 15 zu erzielen könnte die Brecherkammer 15 ganz, d. h. bis zu den Pneumatiktüren hinauf, mit Wasser geflutet werden. Auch das zusätzliche Einsprühen von Wasser in die Brecherkammer 15 oberhalb des Wasserspiegels zur Erzeugung eines Wasservorhanges oberhalb der Wasseroberfläche wäre eine mögliche und vorteilhafte Variante zur sicheren Vermeidung von Emissionen.

Es sei weiters auf eine in manchen Fällen vorteilhafte Variante für die Ausführung der Brechervorrichtung hingewiesen, die aus einer Art Stempel besteht, welcher Stempel in einer Richtung vor und zurück bewegt wird und in seinem Arbeitsweg befindliche Gegenstände zerdrückt. In den Arbeitsweg des Stempels können beispielsweise an zwei gegenüberliegenden Seiten offene oder zu öffnende Container oder Paletten von parallel angeordneten Leuchtstoffröhren, aber selbstverständliche auch entsprechende Behälter mit anderen Lampenformen, eingeschoben und nach einem allfälligen Fluten bis über die höchstliegenden Röhren oder Lampen der Stempel in Bewegung versetzt werden. Die Lampen können aber auch lose auf den Boden der bereits wassergefüllten oder nachträglich gefluteten Brecherkammer geschichtet und dort von einem Stempel zerdrückt werden.

Die chargenweise Behandlung der Lampen, insbesondere beim Brechen, ist besonders vorteilhaft bei der im vorhergehenden Absatz beschriebenen Ausführungsform des Brechers anwendbar. Der Brecher mit Stempel eignet sich besonders für einen taktweisen Betrieb, welcher aber auch bei entsprechender Steuerung über die Füllstandssensoren der Brecherkammer mit Walzenbrechern verwirklicht werden kann.

Nach dem Brechvorgang fallen die Bruchstücke, bestehend aus Glasteilen und allenfalls noch vorhandenen Kunststoff- und/oder Metallanteilen, speziell den Endkappen der Leuchtstoffröhren, auf ein permanent laufendes und mit einer Rutschkupplung versehenes Förderband 19, das unterhalb der Brecherkammer 15 beginnt. Das Förderband 19 ist vorteilhafterweise siebartig ausgeführt und hebt die Bruchstücke aus dem Wasser des Tankes 18, vorbei an den Reinigungsspritzdüsen 20, wonach die Bruchstücke in eine Waschtrommel 21 eingebracht werden. Anstelle des Förderbandes 19 können auch andere Fördereinrichtungen, wie beispielsweise eine Förderschnecke, die in ähnlicher Weise wie ein siebartiges Förderband mit Ablauföffnungen für das Wasser versehen ist, vorgesehen sein.

Die beim Brechvorgang freiwerdenden Gase werden über eine Absaugglocke 22 von einer Pumpe 23 aus der Brecherkammer 15 abgezogen und über ein Aktivkohlefilter 24 einem Kompressor 25 zur Befüllung von Flaschen 26 zugeleitet. Der Kompressor kann auch zum Betreiben der Pneumatikteile der Anlage herangezogen werden. Die Absaugeinrichtungen laufen vorteilhafterweise permanent.

Die Waschtrommel 21 rotiert langsam um ihre im wesentlichen horizontal orientierte Längsachse, wodurch die darin befindlichen Bruchstücke permanent vom im Tank 27 befindlichen Waschmedium, in welches die Waschtrommel 21 zum Teil eintaucht, umspült werden. Überdies werden die Bruchstücke von innerhalb der Waschtrommel 21 angeordneten Spritzdüsen 28 besprüht. Auch die Wandung der Waschtrommel 21 ist siebartig ausgeführt, um die Umspülung der Bruchstücke mit Waschmedium, vorzugsweise auf 50°C bis 60°C mittels der Heizeinrichtung 27a erwärmtes Wasser mit Neutralseife, garantieren zu können. Ferner besitzt die Waschtrommel 21 an der Innenseite einen Spiralengang 29, der den Transport der Glasscherben und der allfälligen weiteren Komponenten bewerkstelligt. Am waagrechten Endgang der Waschtrommel 21 werden die Bruchstücke grob durch Abtropfen getrocknet. Über eine Rutsche30 gelangen die vom Umweltschmutz und von den Leuchtstoffen gereinigten Bruchstücke schließlich zu einer letzten Sortier-und Trenneinrichtung 31.

Die beim Waschen entstehenden Schwaden und Dämpfe des Waschmediums werden von einem Schwadenkondensator 32 abgesaugt, allenfalls gereinigt, kondensiert und das Kondensat wieder dem Waschmedium zugegeben.

Die aus der Waschtrommel 21 beförderten und über die Ausstoßrutsche 30 gleitenden Bruchstücke werden auf dem Vibrationsförderband 33 der Anlage 31 aufgrund ihrer verschiedenen spezifischen Gewichte separiert. Die am Ende der Anlage 2 vorgesehene Anlage 31 ist in Fig. 8 schematisch dargestellt. Durch die Wirkung dieser Anlage 31 werden auf der einen Seite des Förderbandes 33 reines Glas und auf der anderen Seite Metallschrott oder Kunststoffbruchstücke erhalten. Die separierten Fraktionen werden dann in jeweils unterschiedliche Container 34 - für die schwereren Anteile - und 35 - für die leichteren Anteile - eingebracht.

Die Fig. 5 und 6 zeigen die zuvor beschriebene Brech- und Waschanlage 2 mit anstelle des Zuführbehälters Z vorgesehener Trenneinrichtung 1, wobei diese Konstellation besonders vorteilhaft für die Komplettentsorgung von Kompaktleuchtstofflampen und die optimale Rückgewinnung der diese Lampen bildenden Materialien und Rohstoffe ist. Da die einzelnen Bestandteile der jeweiligen Anlagen bereits im Zusammenhang mit der Beschreibung der Fig. 1 bis 4 genau erläutert wurden, kann auf eine genauere Figurenbeschreibung hier bereits verzichtet und auf diese vorher beschriebenen Zeichnungen verwiesen werden.

Selbstverständlich können der Anlage 2 zur Verbesserung ihrer Vielseitigkeit sowohl ein Zuführbehälter Z für ganze Lampen oder grobe Bruchstücke als auch eine Trenneinrichtung 1 für die Zerlegung von Kompaktleuchtstofflampen vorgeschaltet werden. Diese Variante ist in Fig. 7 dargestellt und wird gleichfalls nicht mehr im Detail beschrieben, da alle Bestandteile bereits weiter oben genau erläutert wurden.

In Fig. 9 ist schließlich das System der Reinigung des Waschwassers aus dem Anlagenteil 2 dargestellt. Aus dem Tank 18 der Brecherkammer 16, wo eine Art Vorwäsche stattfindet, und dem Tank 27 mit der Waschtrommel 21, wo die Hauptwäsche durchgeführt wird, gelangt das Wasser bzw. das Waschmedium über je eine Membranfilteranordnung 36, wo die Quecksilberentfernung stattfindet, und je eine Pumpenanordnung 37 in je eine Zentrifuge 38 zur Auszentrifugierung der Leuchtstoffe.

Dem Strom des Waschmediums wird vor der Filterung vorzugsweise auch das Kondensat des Schwadenkondensators 32 zugegeben. Die derart vorgereinigten Waschmedien werden über eine Mikrofilteranlage 39 in ein Absetzbecken 40 geleitet und so von den letzten Verunreinigungen gesäubert. Das gereinigte Wasser wird über die Pumpen wieder in die Anlage, d. h. den Tank 18 bzw. Tank 27 direkt oder über die Spritzdüsen 20 bzw. 28, rückgeführt.

## Patentansprüche

1. Verfahren zum Entsorgen von Lampen, speziell von Leuchtstofflampen, insbesondere Kompaktleuchtstofflampen, sowie von Mischlicht-, Quecksilberdampf-, Metallhalogendampf-, Neon-Hochspannungs-, Neon-Niederspannungs- und Natriumdampflampen, wobei zumindest einige der die Lampe bildenden Teile separiert werden, dadurch gekennzeichnet, daß die Lampen in eine automatische Zuführeinrichtung eingegeben und anschließend von dieser automatisch in zumindest einen nachfolgenden Anlagenabschnitt weitertransportiert werden und dabei zumindest ein Lampenteil bzw. Material abgetrennt wird.

2. Verfahren nach Anspruch 1, dadurch gekennzeichnet, daß die Lampen, insbesondere die Kompakfleuchtstofflampen, nach dem Einbringen in die Entsorgungsanlage automatisch weitertransportiert und dabei zumindest durch einen Schneidesektor, allenfalls zu einer Abtrennvorrichtung für die äußerste Glashülle, einer Abziehvorrichtung für die Leuchtstoffröhre, sowie allenfalls durch weitere Bereiche geführt werden, in welchen Sektoren, Vorrichtungen bzw. Bereichen vorerst der Glasüberkörper abgetrennt und in einen ersten Behälter deponiert, anschließend die eigentliche Leuchtstoffröhre abgetrennt und auf eine Aufnahmevorrichtung aufgeschoben, weiters der Elektronikteil abgetrennt und in einem zweiten Behälter deponiert und schließlich der Lampensockel in einem dritten Behälter deponiert wird.

3. Verfahren zur Entsorgung des Glasanteiles einschließlich allfälliger Gas- und Leuchtstoffanteile von Lampen, speziell von Leuchtstofflampen, insbesondere Kompaktleuchtstofflampen, sowie von Mischlicht-, Quecksilberdampf-, Metallhalogendampf-, Neon-Hochspannungs-, Neon-Niederspannungs- und Natriumdampflampen, dadurch gekennzeichnet, daß der Glasanteil der Lampen, speziell die Leuchtstoffröhre oder Teile davon, einschließlich noch vorhandener weiterer Komponenten einer Brechervorrichtung zugeführt und das Brechen unter Wasser vorgenommen wird nachdem das Zuführen der Lampen bzw. deren Glasanteil und anderer Komponenten vorzugsweise mittels eines Verfahrens gemäß einem der Ansprüche 1 oder 2 durchgeführt wird.

4. Verfahren nach Anspruch 3, dadurch gekennzeichnet, daß die gebrochenen Glasteile und allfälligen weiteren Komponenten aus dem Wasser gehoben und vorzugsweise dabei mit Wasser bespritzt werden, vorzugsweise auch noch unterhalb des Wasserspiegels.

5. Verfahren nach einem der Ansprüche 3 oder 4, dadurch gekennzeichnet, daß die gebrochenen Glasteile und weiteren Komponenten nach dem Brechen und allfälligen Bespritzen mit Wasser in einem erwärmten, vorzugsweise 50 - 60°C aufweisenden, Waschmedium, vorzugsweise in Wasser mit Neutralseife, neuerlich gewaschen werden, wobei die gebrochenen Glasteile vom Waschmedium vorzugsweise umspült, allenfalls auch damit bespritzt werden, wobei sie vorzugsweise im Waschmedium bewegt werden.

6. Verfahren nach Anspruch 5, dadurch gekennzeichnet, daß die beim Waschen mit dem Waschmedium entstehenden Dämpfe abgesaugt, gereinigt, kondensiert und das Kondensat wieder dem Waschmedium zugegeben wird, vorzugsweise auch die beim Brechen freiwerdenden Gase abgesaugt, gereinigt und vorzugsweise zur Wiederverwendung abgefüllt werden.

7. Verfahren nach einem der Ansprüche 3 bis 6, dadurch gekennzeichnet, daß die Lampen, Leuchtstoffröhren bzw. deren Glasanteile chargenweise behandelt werden.

8. Verfahren nach einem der Ansprüche 3 bis 7, dadurch gekennzeichnet, daß die gewaschenen Glasteile als letzter Behandlungsschritt von allenfalls vorhandenen anderen Komponenten mit anderem spezifischem Gewicht getrennt und jeder dieser Teile oder Komponenten vorzugsweise in jeweils separate Behälter eingebracht werden.

9. Vorrichtung zum Entsorgen von Lampen, speziell von Leuchtstofflampen, insbesondere Kompaktleuchtstofflampen, sowie von Mischlicht-, Quecksilberdampf-, Metallhalogendampf-, Neon-Hochspannungs-, Neon-Niederspannungs- und Natriumdampflampen, gekennzeichnet durch einen Behälter (Z) mit zumindest einer, vorzugsweise dicht abschließbaren Einbringungsöffnung für die Lampen und zumindest einer Austragsvorrichtung, vorzugsweise einer Förderschnecke (S) od. dgl., welcher Behälter mit einer Entsorgungsanlage (2) verbunden bzw. verbindbar ist.

10. Vorrichtung zum Entsorgen von Lampen, speziell von Leuchtstofflampen, insbesondere Kompaktleuchtstofflampen, gekennzeichnet durch eine Einbringungs- und Trennanlage (1) mit zumindest im Kreis bewegbaren Pneumatikarmen (4, 4a) zur drehbaren Erfassung und zum Weitertransport von eingelegten Lampen, allfälligen Abtrenneinrichtungen (6, 7) für den Glasüberkörper von Kompaktleuchtstofflampen und allenfalls eine Abziehvorrichtung (10) für die Leuchtstoffröhre, wobei Bereiche, vorzugsweise unterhalb der angeführten Abtenntrenneinrichtung und unterhalb oder in Verbindung mit der Abziehvorrichtung, zur Aufnahme von Behältern (8, 12, 13) für die Einbringung der Lampenteile vorgesehen sind.

11. Vorrichtung nach Anspruch 10, dadurch gekennzeichnet, daß die Abtrenneinrichtung für den Glasüberkörper eine Zwangssteuerungsbahn (5) zur Ausrichtung der Lampe mit nach unten weisendem Glasüberkörper, eine ortsfeste Schneidevorrichtung (6) und eine zur Anlage an einen Umfangsteil der Lampe bestimmten Bremsstreifen (7) umfaßt,vorzugsweise auch eine Abtrenneinrichtung für die Leuchtstoffröhren der Kompaktleuchtstofflampen in Form einer mit Magneten versehen Positioniereinrichtung zur Ausrichtung der Lampen mit den Leuchtstoffröhren aufweist und vorzugsweise der Pneumatikarm mit dem Lampenkörper einschließlich des Elektronikteiles gegenüber einer vorzugsweise ortsfesten Abzugsvorrichtung (10) für die Leuchtstoffröhren absenkbar (bei 4a) ist.

12. Vorrichtung nach einem der Ansprüche 10 oder 11, dadurch gekennzeichnet, daß im Kreissektor nach der Abtrennvorrichtung (10) für die Leuchtstoffröhren eine weitere Zwangssteuerungsbahn (11) zur Ausrichtung der Lampe mit nach unten weisendem Sockel vorgesehen, unterhalb dieses Kreissektors ein Bereich zur Anordnung eines Behälters (12) zur Aufnahme des Elektronikteiles der Lampe sowie in einem anschließenden Kreissektor ein Bereich zur Anordnung eines Behälters (13) für den Kunststoffsockel der Kompaktleuchtstofflampe vorgesehen sind.

13. Vorrichtung zur Entsorgung des Glasanteiles einschließlich allfälliger Gas- und Leuchtstoffanteile von Lampen, speziell von Leuchtstofflampen, insbesondere Kompaktleuchtstofflampen, sowie von Mischlicht-, Quecksilberdampf-, Metallhalogendampf-, Neon-Hochspannungs-, Neon-Niederspannungs- und Natriumdampflampen, umfassend allenfalls eine Abtrenneinrichtung (1) für den den Leuchtstoff enthaltenden Glasanteil, eine Brechervorrichtung (16) und zumindest eine Wascheinrichtung (21) für den gebrochenen Glasanteil, dadurch gekennzeichnet, daß die Brechervorrichtung (16) unterhalb des Flüssigkeitsspiegels in einem Tank (18), vorzugsweise in einer durch Pneumatiktüren (17) verschließbaren Brecherkammer (15), angeordnet ist.

14. Vorrichtung nach Anspruch 13, dadurch gekennzeichnet, daß unterhalb der Brechervorrichtung (16) eine Fördereinrichtung, vorzugsweise ein Förderband (19) beginnt und oberhalb des Wasserspiegels seitlich des Brechers endet, wobei diese Fördereinrichtung vorzugsweise siebartig ausgebildet ist und vorzugsweise im Verlauf der Fördereinrichtung (19) auf diese und die darauf transportierten Glasteile gerichtete Spritzdüsen (20) vorgesehen sind, vorzugsweise auch noch unterhalb des Wasserspiegels.

15. Vorrichtung nach einem der Ansprüche 13 oder 14, dadurch gekennzeichnet, daß eine zumindest teilweise mit einem Waschmedium gefüllte oder in einen Tank (27) mit Waschmedium eintauchende Waschtrommel (21), allenfalls mit siebartig durchbrochener Wandung, vorgesehen ist, die vorzugsweise mit einem Spiralengang (29) an der Innenseite versehen und gegen das der Einbringöffnung gegenüberliegende Ende konisch zulaufend ausgeführt ist.

16. Vorrichtung nach Anspruch 15, dadurch gekennzeichnet, daß das der Einbringöffnung gegenüberliegende Ende der Waschtrommel (21) mit einer Austragsöffnung für die gewaschenen Glasteile und allenfalls weiteren Komponenten versehen ist und oberhalb des Niveaus des Waschmediums liegt.

17. Vorrichtung nach Anspruch 15 oder 16, dadurch gekennzeichnet, daß eine Abzugseinrichtung, ein Schwadenkondensator und Rückführungseinrichtungen (32) für die Dämpfe aus der Waschtrommel (32), vorzugsweise auch Reinigungseinrichtungen (36, 38, 39, 40) für die Dämpfe oder das Kondensat, vorgesehen sind.

18. Vorrichtung nach einem der Ansprüche 10 bis 17, dadurch gekennzeichnet, daß vorzugsweise anschließend an die allfällige Waschtrommel (21) zumindest ein Vibrationsförderband (33) zur Separierung ausgetragenen gebrochenen und allenfalls gewaschenen Komponenten nach deren spezifischem Gewicht vorgesehen ist.

19. Vorrichtung nach einem der Ansprüche 13 bis 18, dadurch gekennzeichnet, daß eine Absaugeinrichtung (22, 23, 24, 25) für die beim Brechen freiwerdenden Gase mit der Brecherkammer (15) in Verbindung steht und vorzugsweise Abtrennvorrichtungen, vorzugsweise zumindest ein Filter (36) und/oder eine Zentrifuge (38), zur Behandlung des Waschwassers aus dem Tank (18) des Brechers bzw. dem Tank (27) des Waschmediums vorgesehen sind.
